# EUROPEAN PATENT APPLICATION

(11) **EP 4 006 513 A1**
(43) Date of publication of application: **01.06.2022**
(21) Application number: 20210757.9
(22) Date of filing: 30.11.2020
(51) Int. Cl.: G01K 7/42, G01K 13/00, A24F 40/51, A24F 40/57

(54) **HEATER TEMPERATURE MEASUREMENT**

(71) Applicant: JT International SA, 1202 Geneva (CH)
(72) Inventor: POPOOLA, Olayiwola Olamiposi, Walton-on-Thames, KT12 2SJ (GB); ADAIR, Kyle, Lisburn, County Antrim BT28 2UW (GB); LOVEDAY, Peter, Woking, Surrey GU24 9PW (GB)
(74) Representative: Gill Jennings & Every LLP

(57) **Abstract**

An aerosol generation device 20 configured to receive a consumable 24 comprising a heater 25, wherein the device comprises: current source control circuitry 21 configurable to receive a variable input from a power source and to supply a regulated fixed current output to the heater; voltage measurement control circuitry 22 configurable to measure the voltage across the heater; and a calculation module 23 configured to: calculate a resistance of the heater using the supplied current and the measured voltage; and calculate a temperature of the heater using the calculated resistance and a temperature coefficient of resistance, TCR.

## Description

### FIELD OF THE INVENTION

The present invention relates to temperature measurement in aerosol generation devices.

### BACKGROUND TO THE INVENTION

An aerosol generation device such as an electronic cigarette typically includes a consumable cartomiser or pod which contains a fluid and a heater. The heater can be used to heat the fluid in order to generate an aerosol. In some designs a heater is used to heat a solid or semi-solid substrate which may contain tobacco, otherwise known as heat-not-burn designs.

Adjusting the power supplied to the heater affects the temperature which in turn affects the rate of aerosol generation. It is useful to measure the temperature of the heater in order to control the aerosol generation rate and monitor the fluid consumption. However, there is no simple or cheap way to measure the temperature of the heater inside the cartomiser.

It is desirable to be able to better determine the temperature of the heater.

### SUMMARY OF THE INVENTION

An aspect of the invention provides an aerosol generation device configured to receive a consumable comprising a heater. The device comprises current source control circuitry, voltage measurement control circuitry and a calculation module. The current source control circuitry is configurable to: receive a variable input from a power source; and supply a regulated current output to the heater. The voltage measurement control circuitry is configurable to measure the voltage across the heater. The calculation module is configured to: calculate a resistance of the heater using the supplied current and the measured voltage; and calculate a temperature of the heater using the calculated resistance and a temperature coefficient of resistance, TCR.

The variable input is typically a variable input voltage. Advantageously, the supply of the regulated current to the heater provides a more accurate estimate of the heater temperature due to the more accurate calculation of the resistance.

The calculation of the resistance of the heater is based on the supplied current and the measured voltage. Accordingly, if the value of the supplied current is accurately known and can be reliably maintained during the measurement of the voltage across the heater, the resistance is calculated more accurately. The supply of a regulated current output provides such a known current value.

The current source control circuitry forms part of the aerosol generation device and can therefore only supply a current to the heater when a consumable is inserted. Similarly, the voltage measurement control circuitry is part of the aerosol generation device and is configured to measure the voltage across the heater when the consumable is inserted.

Optionally, the consumable is a consumable cartomiser. A consumable cartomiser comprises a fluid reservoir and may also be referred to as an atomiser or a pod. Alternatively, the consumable may be of a heat-not-burn design comprising a substrate. The substrate is typically solid or semi-solid.

The current output of the current source control circuitry is preferably implemented using an analog system. In contrast to a digital system, an analog system advantageously results in less switching noise, fewer harmonics and fine control of the heater power delivery. The fine control of heater power in turn advantageously improves device safety, results in deterministic behaviour, extends battery life, and reduces waste.

The current source control circuitry preferably includes a current source. Advantageously, a current source can be used to supply a regulated current output in the form of a settable and/or constant current which is independent of the voltage across it. The current source may be configured to supply a constant current. The current source may also be configured to supply a current which can be set using the current source control circuitry. The set current is preferably maintained at a fixed value. The current source may for example be an independent current source.

Optionally, the current source control circuitry comprises a differential amplifier circuit such as operational amplifier circuit. The current source control circuitry may comprise multiple operational amplifier circuits. The current source control circuitry may further comprise one or more switches such as metal oxide semiconductor field effect transistor (MOSFET) switches. Typically, the operational amplifier circuits can be used to control the switch behaviour and thus advantageously help provide a constant current to the heater.

According to this aspect of the invention, the aerosol generation device is configured to receive a consumable which is disposable. Each consumable comprises a heater. The resistance of each heater at a specific temperature typically varies within a tolerance for a batch of heaters. However, typically, the rate of change of resistance with temperature is substantially the same for the same type of heater. The temperature coefficient of resistance, TCR, is equal to the rate of change of resistance with temperature and is used by the calculation module to calculate the heater temperature based on the heater resistance.

The TCR can be calculated for a heater by determining the heater resistance at each of a plurality of known temperatures. However, the device preferably further comprises a storage module which is configured to store the TCR. The stored TCR may be determined by averaging the TCR for a number of other heaters of the same type. Typically, the stored TCR is determined prior to use of the device. Advantageously, storing the TCR in the storage module reduces the time spent calibrating the consumable upon insertion into the device and can reduce the necessary control circuitry within the device.

Another aspect of the invention provides a method for measuring a temperature of a heater of a consumable for an aerosol generation device. The method comprises: receiving a variable input from a power source; supplying a regulated current output to the heater; measuring a voltage across the heater; calculating a resistance of the heater using the supplied current and the measured voltage; and calculating the temperature of the heater using the calculated resistance and a temperature coefficient of resistance, TCR.

The variable input is typically a variable input voltage. An advantage of the supply of a regulated current output to the heater is a more accurate estimate of the heater temperature. The heater temperature is calculated using the heater resistance, which in turn is calculated using the measured voltage and the known value of the supplied current. In order to accurately determine the heater resistance, the known value of the supplied current must be accurately known. This method advantageously provides such a regulated current output.

Preferably, the current is supplied using a current source, such as an independent current source. Advantageously, a current source can be used to supply a fixed current independent of the voltage across it. An advantage of using a current source is that it outputs a fixed current which can be maintained.

Typically, the current level of a current source is settable, and can therefore advantageously be set according to requirements. Supplying the current to the heater optionally comprises: setting the current; and supplying the set current to the heater. For example, the current may be set according to the heater resistance based on a recommended power consumption.

The method includes calculating the temperature of the heater using the calculated resistance and a temperature coefficient of resistance, TCR. Optionally, the method further comprises determining the TCR. The step of determining the TCR may be performed using the device for each consumable heater. Alternatively, the step of determining the TCR may be performed separately from the device. An advantage of determining the TCR in this way is the simplification of the method, as the determined TCR may be used for the heater of any inserted consumable.

Determining the TCR typically comprises: determining a first TCR for a first heater; determining a second TCR for a second heater; and calculating the TCR by averaging the first and second TCRs. Typically, although the absolute heater resistance varies between heaters of the same type, the rate of change of resistance with temperature is substantially the same for heaters of the same type. Use of an average TCR value advantageously results in a more accurate estimate of the TCR. Optionally, the TCR can be determined for additional heaters. An advantage of using a larger sample size is the reduction of uncertainty of the average value of the TCR.

Preferably, determining a first TCR for a first heater comprises: measuring the resistance at each of a plurality of known temperatures; and calculating the rate of change of the resistance with respect to temperature. Typically, the resistance is approximately linearly dependent on the temperature. The TCR of each heater used in the sample can be determined in the same way. This may be performed separately from the device as, typically, neither the aerosol generation device nor the consumable has a thermometer. Advantageously, the measurement of the resistance at each of a plurality of known temperatures results in a good estimate of the TCR.

The determined TCR is preferably stored in the aerosol generation device. Typically, the aerosol generation device is configured to receive a consumable comprising a heater. Optionally, the consumable is disposable. An advantage of storing the TCR in the aerosol generation device is the reduced set-up time upon insertion of a new consumable, as the TCR does not need to be determined before use.

However, the absolute heater resistance may vary between heaters. The method may therefore further comprise: inserting the consumable into an aerosol generation device; and calibrating the consumable at a first temperature when inserted by calculating the resistance of the heater at the first temperature. An advantage of calibrating the consumable is that the device can be configured to supply the recommended power consumption to the heater element based on the calibration using the absolute resistance measurement.

The first temperature is preferably a known temperature. For example, the first temperature may be room temperature or ambient temperature. Optionally, calibrating the consumable at the first temperature comprises: supplying a first current to the heater; measuring a first voltage across the heater; and calculating a first resistance of the heater using the supplied first current and the measured first voltage. An advantage of calibrating the consumable at a known temperature such as the first temperature is that, in combination with the stored TCR, the resistance as a function of temperature can be determined for a range of temperatures. Preferably, the first current is a constant current supplied by a current source configured to supply a regulated current output. The first current can be set and maintained at a fixed value.

A further aspect of the invention provides a computer readable medium comprising instructions which when executed by a computer cause the computer to carry out steps comprising: supplying a regulated current output from a variable input; measuring a voltage; calculating a resistance using the current and the voltage; and calculating a temperature using the calculated resistance and a temperature coefficient of resistance.

An advantage of supplying a regulated current output is that the current is an accurately known value which can be used to provide a better estimate of the resistance and consequently the temperature.

### BRIEF DESCRIPTION OF THE DRAWINGS

Embodiments of the invention will now be described with reference to the accompanying drawings in which:
Figure 1 is a circuit diagram in accordance with a first embodiment;
Figure 2 is a schematic illustration of an aerosol generation device;
Figure 3 is a circuit diagram in accordance with a second embodiment;
Figure 4 is a trace showing changes in current and voltage over time; and
Figure 5 is a graph depicting resistance as a function of temperature.

### DETAILED DESCRIPTION

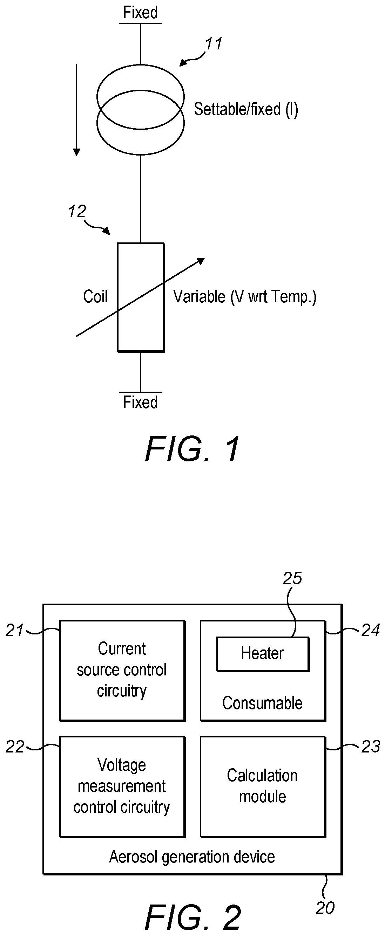

Figure 1 schematically illustrates a circuit diagram in accordance with an embodiment of the invention. The circuit comprises a current source 11 and a heater 12. The temperature of the heater 12 can be determined by supplying a regulated current output to the heater 12 and measuring the voltage across the heater 12.

The current source 11 is configured to supply such a regulated current output to the heater 12. The current output is settable according to circuit requirements and can be maintained at a constant value, independent of the voltage across the current source 11. The current source 11 is configured to supply a fixed current whilst receiving a variable input voltage from a power source. In this embodiment, the current source 11 is an independent current source. In this example, the power source is a battery, and the battery is part of an aerosol generation device.

It is noted that the current is not directly provided to the heater by the battery. If the current were to be supplied to the heater by the battery, the flow of current would alter the battery voltage and thus alter the applied current, leading to inaccuracies in the voltage measurement across the heater and consequent inaccuracies in the calculated heater resistance and heater temperature. This is in part due to the low impedance nature of the battery. Inaccuracies of this kind can cause problems in the generation of an aerosol such as spitting, irregular total particulate matter (TPM) and dry burn.

The heater 12 in this embodiment is a variable resistive heater comprising a coil and may be referred to as a heater coil or heater element. In this embodiment, the heater 12 is a ceramic heater. In alternative embodiments, the heater may be any suitable resistive heater. The voltage across the heater 12 is variable with respect to temperature. Typically, the voltage varies approximately linearly with temperature. In order to determine the temperature of the heater 12, the voltage is measured. The heater resistance can be calculated using the known current supplied by the current source 11 and the measured voltage. The temperature can be determined based on the relationship between heater resistance and heater temperature. This relationship may be known, estimated, or approximated.

Figure 2 schematically illustrates an aerosol generation device 20. The aerosol generation device 20 includes current source control circuitry 21, voltage measurement control circuitry 22 and a calculation module 23. In use, the aerosol generation device 20 also includes a consumable 24. In this embodiment the consumable 24 is a sealed unit comprising a heater 25 and a fluid reservoir and may be referred to as a cartomiser, an atomiser, or a pod. When the consumable 24 is inserted into the aerosol generation device 20, an aerosol can be controllably generated by supplying electrical power to the heater 25 and consequently heating the fluid in the fluid reservoir to generate an aerosol or vapour. In an alternative embodiment, the consumable comprises a solid or semi-solid substrate which may contain tobacco. The substrate can be heated using the heater in the consumable to generate an aerosol.

The generation of aerosol is dependent on the temperature of the heater 25. The generation of aerosol may also be dependent on other factors such as the fill level of the fluid reservoir. The temperature of the heater 25 is determined using the current source control circuitry 21, voltage measurement control circuitry 22 and calculation module 23. The heater 25 is a resistive heater and the resistance is substantially linearly dependent on the temperature. When the consumable 24 is inserted into the aerosol generation device 20, the current source control circuitry 21 is configured to supply a regulated current output to the heater 25. The current source control circuitry 21 is configured to supply a constant current, the value of which can be set according to requirements.

Voltage measurement control circuitry 22 is configured to measure the voltage across the heater. For a fixed current, as supplied by the current source control circuitry 21, the voltage is directly proportional to the resistance. Accordingly, the voltage, in addition to the resistance, is substantially linearly dependent on the temperature in this embodiment.

Following a measurement of the voltage across the heater 25 using the voltage measurement control circuitry 22, the calculation module 23 is configured to calculate a resistance of the heater 25 using the supplied current and measured voltage. The supplied current is a known value and is regulated at a fixed set value by the current source control circuitry 21. The voltage across the heater 25 is a measured value and varies depending on the heater temperature.

The calculation module 23 is further configured to calculate the temperature of the heater 25 using the calculated resistance and a temperature coefficient of resistance, TCR. The TCR represents the effect of temperature on the heater resistance. The TCR is the rate of change of resistance as a function of temperature.

In this embodiment, the TCR is a pre-determined constant, determined by calculating the rate of change of resistance as a function of temperature for a plurality of heaters and calculating the average value. Typically, although the absolute resistance varies between heaters, the rate of change of resistance is approximately the same. Accordingly, the TCR can be taken to be a constant for a particular set of resistive heaters. In this embodiment, the aerosol generation device comprises a storage module (not shown) configured to store the pre-determined TCR for use by the calculation module.

The consumable 24 is designed as a separable unit which can be inserted into the aerosol generation device 20. In alternative embodiments, the consumable may comprise a portion of control circuitry used for the temperature measurement. In one example, the consumable may comprise voltage measurement control circuitry. In another example, both the consumable and the aerosol generation device may comprise current source control circuitry. In each example or embodiment, the insertion of the consumable into the aerosol generation device completes the necessary control circuitry to determine the temperature of the heater in the consumable.

The accurate measurement of heater temperature can be used to monitor the device behaviour. For example, for a consumable cartomiser, an uncharacteristic temperature rise may indicate an empty fluid reservoir in the consumable 24. This may be detected by circuitry within the aerosol generation device 20 and used to trigger a warning to a user that the consumable needs to be replaced.

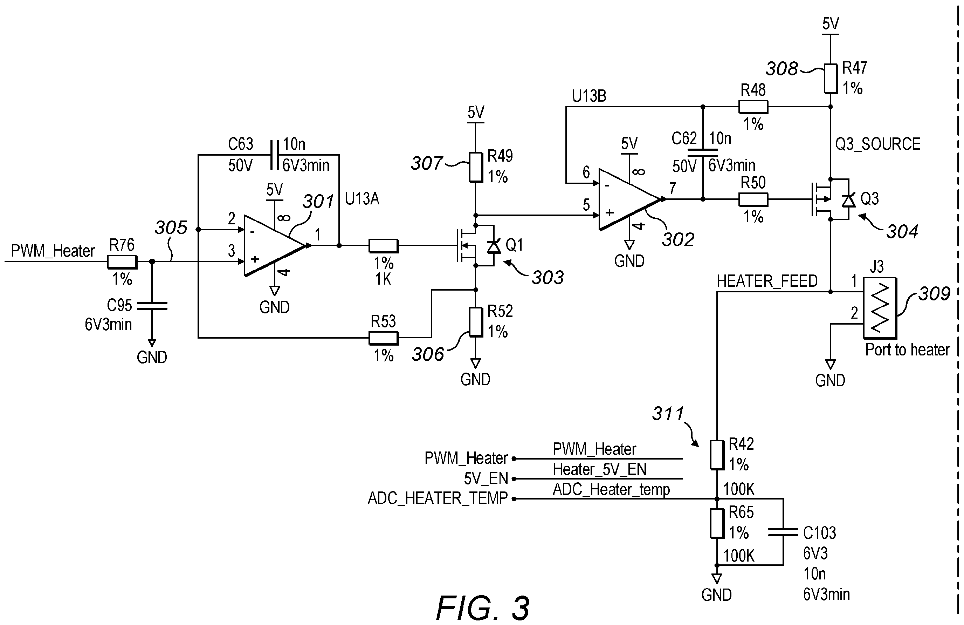

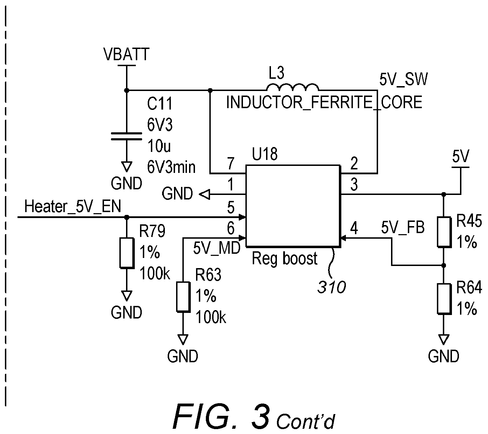

Figure 3 illustrates an exemplary circuit diagram in accordance with an embodiment of the invention. In Figure 3, the circuit includes a first operational amplifier 301, a first switch 303, a second operational amplifier 302 and a second switch 304. In this embodiment, the first and second switches 303, 304 are metal oxide semiconductor field effect transistor (MOSFET) switches.

In this embodiment, the analog voltage input 305 to the first operational amplifier 301 is set by the heater signal, a resistor and a capacitor. In an alternative embodiment, the analog voltage input to the first operational amplifier may be replaced by a digital-to-analog converter (DAC). The DAC converter may be in the form of an integrated circuit, or in the form of a microcontroller. In another alternative embodiment, the analog voltage input to the first operational amplifier may be replaced by a R-2R resistor ladder network comprising repeating units of resistors. In a further alternative embodiment, the analog voltage input to the first operational amplifier may be replaced by another pulse width modulation (PWM) and resistor capacitor (RC) network.

Importantly, the input to the first operational amplifier 301 is separate from the electrical load, i.e. the input is not part of the heater element circuit. This circumvents the observer effect, in which the behaviour of each component within a circuit can affect the behaviour of each of the other components within the same circuit.

The first operational amplifier circuit 301 compares the analog voltage input 305 to the voltage across a first resistor 306 to regulate the switching of the first switch 303. When the first switch 303 is closed, the current flows through a second resistor 307. The voltage across the second resistor 307 is then compared to the voltage across a third resistor 308 to regulate the switching of the second switch 304.

The circuit as illustrated and described allows substantially the same current as setup at the input 305 to the first operational amplifier 301. Accordingly, this circuit is configured to supply a regulated current output to a heater 309.

In the exemplary circuit illustrated in Figure 3, the current at the heater 309 is proportional to the voltage cross the first resistor 306. The constant of proportionality is equal to 1.5 in this example.

The circuit further comprises a power supply 310. A power source provides a variable input voltage to the power supply 310. In this embodiment, the power source is a battery and the power supply 310 is a switch-mode power supply with a high impedance 5 volt output. The switch-mode power supply 310 can be used to attain a regulated direct current, DC, output voltage from an unregulated DC input voltage. The heater is low impedance. The use of a high impedance power supply output in combination with a low impedance heater ensures that the current supplied to the heater remains fixed at the set value. The set value of the current is determined by the circuit.

The battery is separate from the current source, and the limited range of the current source supply does not affect the battery. The battery is not used to directly supply a current to the heater. The battery is a power source for the control circuitry within the aerosol generation device and is not limited by the circuit design. Specifically, the battery current is not limited by the circuit design.

The characteristics of the components of the circuit are selected based on values provided by the manufacturer such as average heater resistance, heater resistance range, and recommended power consumption of the heater element. The circuit can be designed to extend outside the range specified by the manufacturers as it is expected that characteristics vary between heaters.

As an example, the manufacturer may specify a heater resistance range between 1.0-1.9 ohm and a recommended heater element power consumption of 6.5 watts. Based on these values, the circuit may be designed to accommodate a heater resistance range between 0.5-2.0 ohm and a power consumption of 7.5 watts. Accordingly, the current source is designed to output between 0 and 4 amps. For a heater resistance of 0.5 ohm and a power consumption of 7.5 watts, the current source is set to 3.87 amps. For a heater resistance of 2.0 ohm and a power consumption of 7.5 watts, the current source is set to 1.94 amps.

When a regulated current is output to the heater, a high impedance low current path potentiometer 311 is used to measure the voltage across the heater element. A high impedance potentiometer is used in conjunction with a low impedance load. The measured voltage can be used to calculate the heater resistance and subsequently the heater temperature as described in relation to Figures 1 and 2.

The circuit diagram given in Figure 3 provides detailed implementation details which allow the skilled person to implement the invention as described.

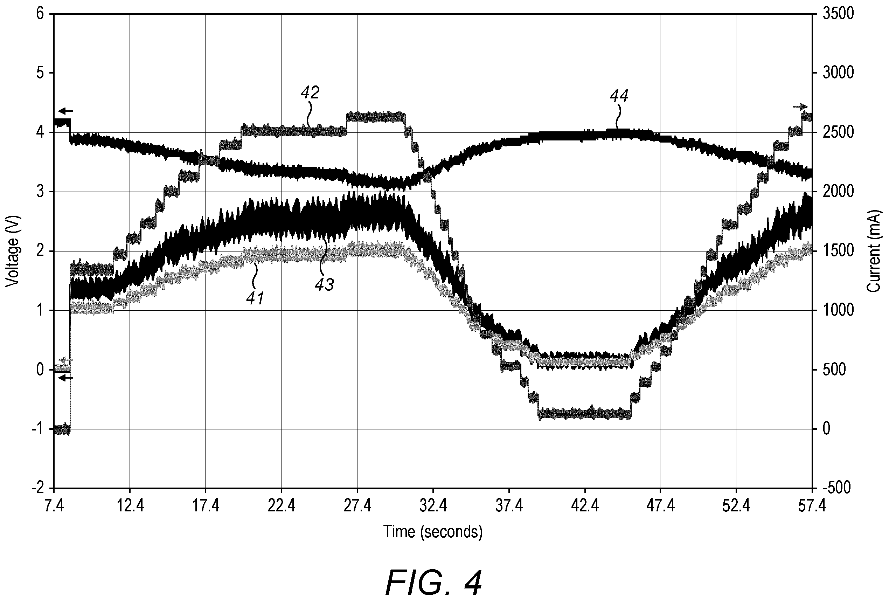

Figure 4 illustrates an oscilloscope display with four traces corresponding to components in the circuit illustrated in Figure 3. A first trace 41 shows the voltage applied to the current source. A second trace 42 corresponds to the current source and shows the output current.

A digitial to analog converter (DAC) or simulated DAC sets the output current as shown in the second trace 42 by applying the voltage as shown in the first trace 41. Use of a DAC or simulated DAC provides fine control of heater power delivery. The output current is proportional to the applied voltage.

A third trace 43 corresponds to the heater and shows the voltage measured across the heater. A fourth trace 44 corresponds to the battery and shows the voltage measured across the battery. It is noted that the battery is separate from the current source and thus the variability of the battery under load does not affect the circuit.

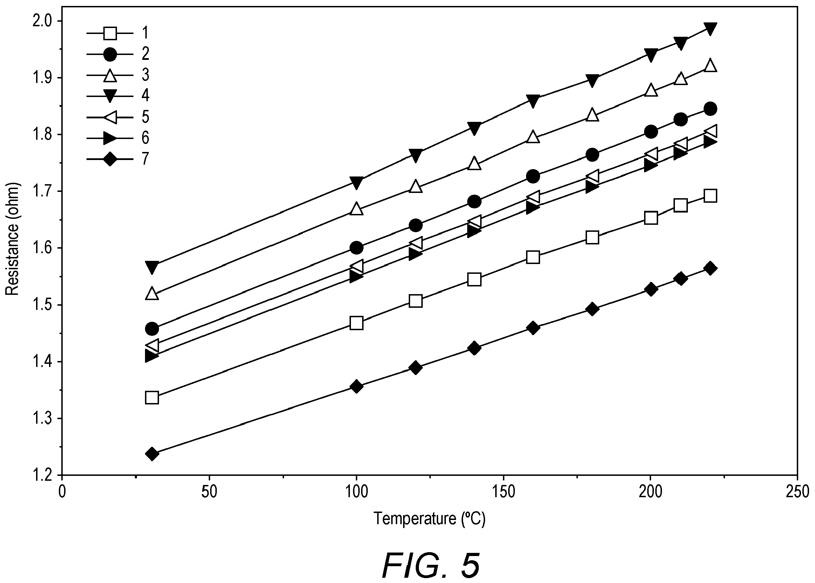

Figure 5 is a graph illustrating resistance as a function of temperature for seven heater elements 1, 2, 3, 4, 5, 6, 7. For temperatures between 25 and 225 degrees centigrade, the resistance varies between 1.2 and 2.0 ohm.

Each heater element is a heater for a consumable which can be inserted into an aerosol generation device. As can be seen in the graph, the absolute resistance of a heater element varies, but the rate of change of resistance with temperature is approximately the same for each heater element 1-7. The rate of change of resistance with temperature is also known as the temperature coefficient of resistance, TCR. The TCR is used to determine the temperature of the heater element, as discussed with reference to Figure 1 and Figure 2, for example.

Due to the fact that the TCR is approximately the same for any heater element within a batch of heater elements, an average TCR is determined and stored by the aerosol generation device for use in the subsequent calculations.

The TCR of each heater element 1-7 is determined by measuring the resistance of the heater at each of a plurality of known temperatures, fitting a straight line to the measured values, and calculating the gradient of the line. In this embodiment, the TCR is equal to the gradient of the line, ΔR/ΔT. In an alternative embodiment, the TCR is proportional to the gradient of the line.

In this embodiment, the TCR is determined for seven heater elements 1-7. However, any number of heater elements may be tested. Testing a larger number of heater elements may result in a reduced uncertainty in the average value. Testing a smaller number of heater elements is faster to perform. Typically a suitable intermediate number of heater elements is tested. The average TCR value is stored within the device. The stored TCR value can then be used to calculate the temperature of any random heater element.

When a new consumable is first inserted into the aerosol generation device, it is first calibrated. The calibration process involves first determining the resistance of the heater at a first temperature, T₁, which is a known temperature such as room temperature, or ambient temperature. In this embodiment, the resistance of the heater is determined by: supplying a first current, I₁, to the heater using the current source control circuitry; using the voltage measurement control circuitry to measure a first voltage, V₁, across the heater; and calculating a first resistance, R₁, of the heater using the supplied current and the measured voltage, R₁ = V₁/I₁. The calibration process determines the resistance offset, i.e. the absolute resistance, of the heater element of the newly-inserted consumable.

Once the new consumable has been calibrated, the aerosol generation device can be used normally. At a second temperature, T₂, greater than the first temperature, T₁, T₂ > T₁, the current source control circuitry is used to supply the first current, I₁, to the heater. The voltage measurement control circuitry is used to measure a second voltage, V₂, across the heater and a second heater resistance, R₂, is calculated using the supplied current and the measured voltage, R₂ = V₂/I₁. The change in temperature of the heater, ΔT = T₂ - T₁, can be calculated using the change in resistance and the temperature coefficient of resistance, TCR, ΔT = ΔR/TCR, with ΔR = R₂ - R₁. The second temperature, T₂, can be determined using the known first temperature, T₁, and the calculated change in temperature, ΔT, T₂ = T₁ + ΔT.

As will be appreciated, an aerosol generation device is provided with control circuitry configured to supply a regulated current output which is consequently known to good degree of accuracy. Accordingly, the accuracy of the measurements and calculations based on the supplied current are greatly improved and the heater temperature can be determined with a greater accuracy. This results in improved device behaviour such as controlled aerosol generation and longer battery life.

## Claims

1. An aerosol generation device configured to receive a consumable comprising a heater, wherein the device comprises:
current source control circuitry configurable to receive a variable input from a power source and to supply a regulated current output to the heater;
voltage measurement control circuitry configurable to measure the voltage across the heater; and
a calculation module configured to:
calculate a resistance of the heater using the supplied current and the measured voltage; and
calculate a temperature of the heater using the calculated resistance and a temperature coefficient of resistance, TCR.

2. The device according to claim 1, wherein the current source control circuitry comprises an operational amplifier circuit.

3. The device according to claim 1 or claim 2, further comprising a storage module configured to store the TCR.

4. A method for measuring a temperature of a heater of a consumable for an aerosol generation device, wherein the method comprises:
receiving a variable input from a power source;
supplying a regulated current output to the heater;
measuring a voltage across the heater;
calculating a resistance of the heater using the supplied current and the measured voltage; and
calculating the temperature of the heater using the calculated resistance and a temperature coefficient of resistance, TCR.

5. The method according to claim 4, wherein the current is supplied using an independent current source.

6. The method according to claim 4 or claim 5, wherein supplying the current to the heater comprises:
setting the current; and
supplying the set current to the heater.

7. The method according to any of claims 4 to 6, wherein the method further comprises:
determining the TCR.

8. The method according to claim 7, wherein determining the TCR comprises:
determining a first TCR for a first heater;
determining a second TCR for a second heater; and
calculating the TCR by averaging the first and second TCRs.

9. The method according to claim 7 or claim 8, wherein the aerosol generation device is configured to receive a consumable, and wherein the determined TCR is stored in the aerosol generation device.

10. The method according to any of claims 4 to 9, wherein the method further comprises:
inserting the consumable into the aerosol generation device; and
calibrating the consumable at a first temperature when inserted by calculating the resistance of the heater at the first temperature.

11. The method according to claim 10, wherein the first temperature is room temperature or ambient temperature, and wherein calibrating the consumable at the first temperature comprises:
supplying a first current to the heater;
measuring a first voltage across the heater; and
calculating a first resistance of the heater using the supplied first current and the measured first voltage.

12. A computer readable medium comprising instructions which when executed by a computer cause the computer to carry out steps comprising:
supplying a regulated current output from a variable input;
measuring a voltage;
calculating a resistance using the current and the voltage; and
calculating a temperature using the calculated resistance and a temperature coefficient of resistance.
